# EUROPEAN PATENT SPECIFICATION

(11) **EP 4 108 952 B1**
(45) Date of publication and mention of the grant of the patent: **14.10.2026**
(21) Application number: 22179284.9
(22) Date of filing: 15.06.2022
(51) Int. Cl.: F16F 1/41

(54) **AXLE SPRING WITH LAMINATED STRUCTURE**
ACHSFEDERN MIT LAMINIERTER STRUKTUR
RESSORT D'ESSIEU À STRUCTURE LAMINÉE

(30) Priority: 22.06.2021 JP 2021103041
(43) Date of publication of application: 28.12.2022
(73) Proprietor: Nitta Chemical Industrial Products Co., Ltd., Osaka-shi, Osaka 556-0022 (JP)
(72) Inventor: KASHIHARA, Hiroki, Hyogo 6751112 (JP)
(74) Representative: Bandpay & Greuter

(56) References cited:
- EP-A1- 3 712 461
- WO-A1-2018/046150
- CN-A- 106 949 181
- US-A- 4 615 538

## Description

### BACKGROUND OF THE INVENTION

### TECHNICAL FIELD

The present invention relates to an axle spring favorably used for a vehicle, particularly for a railway vehicle.

### DESCRIPTION OF THE RELATED ART

For example, an axle spring is interposed between a wheel traveling on a rail and a truck in a railway vehicle. By elastically suspending the truck using the axle spring, an impact received by the truck can be absorbed and lessened.

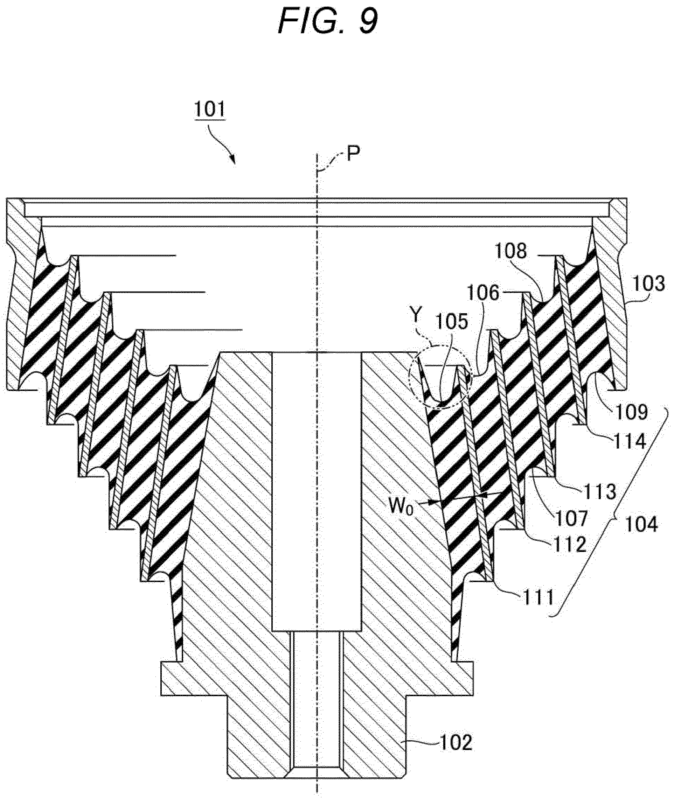

Regarding the axle spring, various proposals have been made up to present (for example, JP 6789094 B2 and JP 2020-063761 A) and put into practical use. Here, an example of a conventional axle spring is illustrated in FIG. 9.

FIG. 9 is a longitudinal sectional view illustrating an example of a conventional axle spring in which an illustrated axle spring 101 includes a main shaft 102 disposed in a vertical direction, a tapered cylindrical outer cylinder 103 disposed concentrically with respect to a shaft center P of the main shaft 102 in an outward radial direction of the main shaft 102, and an elastic portion 104 interposed between the main shaft 102 and the outer cylinder 103. The elastic portion 104 has a laminated structure in which a plurality (five in the illustrated example) of tapered cylindrical elastic bodies 105, 106, 107, 108, and 109 and a plurality (four in the illustrated example) of tapered cylindrical intermediate hard cylinders 111, 112, 113, and 114 are concentrically arranged and alternately laminated in a radial direction.

In the axle spring 101, the main shaft 102, the outer cylinder 103, and each of the intermediate hard cylinders 111 to 114 are made of metal. Each of the elastic bodies 105 to 109 is made of rubber. The outer cylinder 103, each of the elastic bodies 105 to 109, and each of the intermediate hard cylinders 111 to 114 are configured as tapered cylinders (truncated conical cylinders) inclined inward (inward radial direction) at a predetermined angle with respect to the shaft center P of the main shaft 102 so as to have a decreasing diameter upward. In the inclined (conical) axle spring 101 including the outer cylinder 103, the elastic bodies 105 to 109, and the intermediate hard cylinders 111 to 114 inclined in this manner, an upper end portion of the outer cylinder 103 is attached to a truck side via a mounting plate (not illustrated), and a lower end portion of the main shaft 102 is attached to an axle box (not illustrated). While not illustrated, note that the axle box rotatably supports the wheel and an axle, and the axle spring 101 is interposed between the axle box and the truck. EP3712461 discloses a spring element.

### SUMMARY OF THE INVENTION

In the conventional axle spring 101 illustrated in FIG. 9, each of the elastic bodies 105 to 109 made of rubber are respectively fixed by vulcanization adhesion or the like between the main shaft 102 and the intermediate hard cylinder 111, the adjacent intermediate hard cylinders 111 and 112, 112 and 113, and 113 and 114, as well as between the outer cylinder 103 and the intermediate hard cylinder 114. However, the axle spring 101 receives a dynamic load in each of a vertical direction, a horizontal direction, and a front-rear direction in a state in which a static load is applied in a vertical direction. In this case, in the inclined axle spring 101 having the inclined elastic bodies 105 to 109 and the inclined intermediate hard cylinders 111 to 114, when a load is received in the vertical direction, while a shearing force and a compressive force act on each of the elastic bodies 105 to 109, a large shearing force acts on each upper surface side of each of the elastic bodies 105 to 109. Thus, when each of the elastic bodies 105 to 109 receives a load in the front-rear and horizontal directions in this state, tensile and compressive loads are applied to these elastic bodies 105 to 109.

As described above, when tensile and compressive loads are applied to each of the elastic bodies 105 to 109, significant stress and strain is generated at upper portions of these elastic bodies 105 to 109, particularly at the upper portion (Y portion in FIG. 9) of the innermost elastic body 105. This leads to a problem in which cracking or peeling occurs at this portion, reducing the durability of the axle spring 101.

Therefore, a first object of the present invention is to provide an axle spring with improved durability by preventing cracking and peeling at an upper portion of an innermost elastic body.

In order to solve the above problem, a method of increasing a thickness of the innermost elastic body 105 to decrease strain rate (displacement/thickness of elastic body) has been considered. However, when the thickness of the elastic body 105 is increased, a spring constant of the elastic body 105 is reduced, and spring characteristics required for the axle spring 101 cannot be ensured.

In addition, a method of adjusting the spring constant of the axle spring 101 by increasing a hardness of the elastic bodies 105 to 109 made of rubber has been considered. However, in this method, the spring constant of the innermost elastic body 105 is reduced, while displacement increases due to the load of the innermost elastic body 105. As a result, the strain rate becomes equal or increases, leading to a reduction in durability of the axle spring 101.

Therefore, a second object of the present invention is to provide an axle spring with improved durability while maintaining the required spring characteristics.

In order to achieve the above objects, an axle spring according to claims 1 and 2 is provided.

In addition, the axle spring according to the present invention has the same spring characteristics as other axle spring and has higher durability than the other axle spring. The other axle spring has a same length in a vertical direction of an innermost elastic body as the length in the vertical direction of the innermost elastic body of the axle spring, and has a same longitudinal cross-sectional area of an innermost elastic body as the longitudinal cross-sectional area of the innermost elastic body of the axle spring, and has a constant thickness of an innermost elastic body.

According to the present invention, since the thickness W₁ of the upper portion of the innermost elastic body fixed to the outer peripheral surface of the main shaft is increased to be the thickest, stress and strain generated at this portion can be minimized. As a result, cracking and peeling generated at the upper portion of the innermost elastic body, in which the greatest amount of stress and strain is generated, is prevented, increasing durability of the axle spring.

In addition, by making the longitudinal cross-sectional area of the innermost elastic body the same as the longitudinal cross-sectional area of the innermost elastic body of other axle spring with a constant thickness along the vertical direction, it is possible to satisfy the spring characteristics (spring constants in a vertical direction and a horizontal direction, or the like) required for the axle spring. Therefore, it is possible to increase durability of the axle spring while maintaining the spring characteristics required for the axle spring.

### BRIEF DESCRIPTION OF THE DRAWINGS

FIG. 1 is a side view of a main part of a railway vehicle illustrating a usage example of axle spring according to a first embodiment of the present invention;
FIG. 2 is a longitudinal sectional view of the axle spring according to the first embodiment of the present invention;
FIG. 3 is a plan view of the axle spring according to the first embodiment of the present invention;
FIG. 4 illustrates a change in thickness along a vertical direction of an innermost elastic body of the axle spring according to the first embodiment of the present invention compared with the Comparative Example;
FIGS. 5A and 5B illustrate stress analysis results of an elastic body by the finite element method (FEM), FIG. 5A being a cross-sectional perspective view of a main part of an elastic portion of the axle spring according to the first embodiment of the present invention, and FIG. 5B being a cross-sectional perspective view of a main part of an elastic portion of an axle spring of the Comparative Example;
FIG. 6A is a diagram illustrating a relationship between displacement and load in a vertical direction of the axle spring according to the first embodiment of the present invention, and FIG. 6B is a diagram illustrating a relationship between displacement and load in a horizontal direction of the same axle spring;
FIG. 7 is a longitudinal sectional view of an axle spring according to a second embodiment of the present invention;
FIG. 8 illustrates a change in thickness along a vertical direction of an innermost elastic body of the axle spring according to the second embodiment of the present invention compared with the Comparative Example; and
FIG. 9 is a longitudinal sectional view illustrating one example of a conventional axle spring.

### DETAILED DESCRIPTION

Embodiments of the present invention are described hereinafter with reference to the accompanying drawings.

### <First Embodiment>

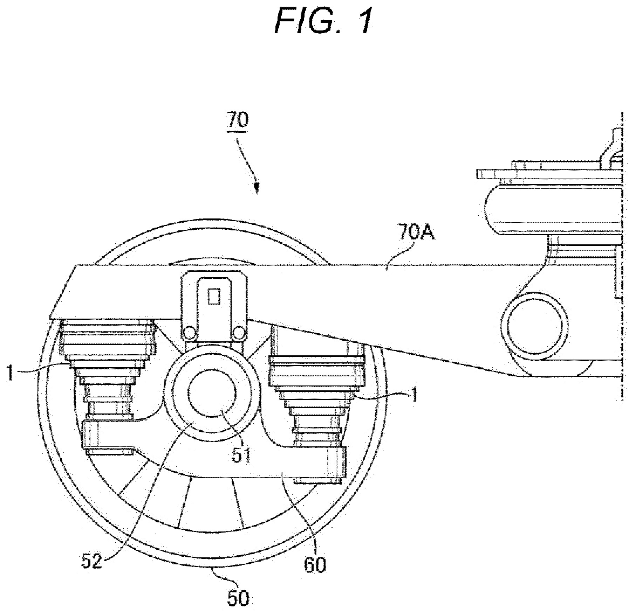

FIG. 1 is a side view of a main part of a railway vehicle illustrating a usage example of axle spring according to the present embodiment. As illustrated in FIG. 1, a wheel 50 and an axle 51 are rotatably supported by an axle box 60 via a bearing 52. Also, axle spring 1 according to the present embodiment is interposed between each of a front and rear (left and right in FIG. 1) of the axle 51 and a truck frame 70A of a truck 70, with the axle 51 of the axle box 60 interposed therebetween. Accordingly, the load of the truck 70 is partially supported by two axle springs 1 at the front and rear, and is suspended to be displaceable in the vertical, horizontal, and front-rear directions with respect to the wheel 50 and the axle 51. Note that while one side of the support structure in a width direction (a direction perpendicular to the paper surface of FIG. 1) is illustrated in FIG. 1, each of the wheel 50, the axle box 60, and the pair of axle springs 1 at the front and rear are actually provided on both sides in the width direction, thus the truck 70 is actually elastically supported by eight axle springs 1 in total.

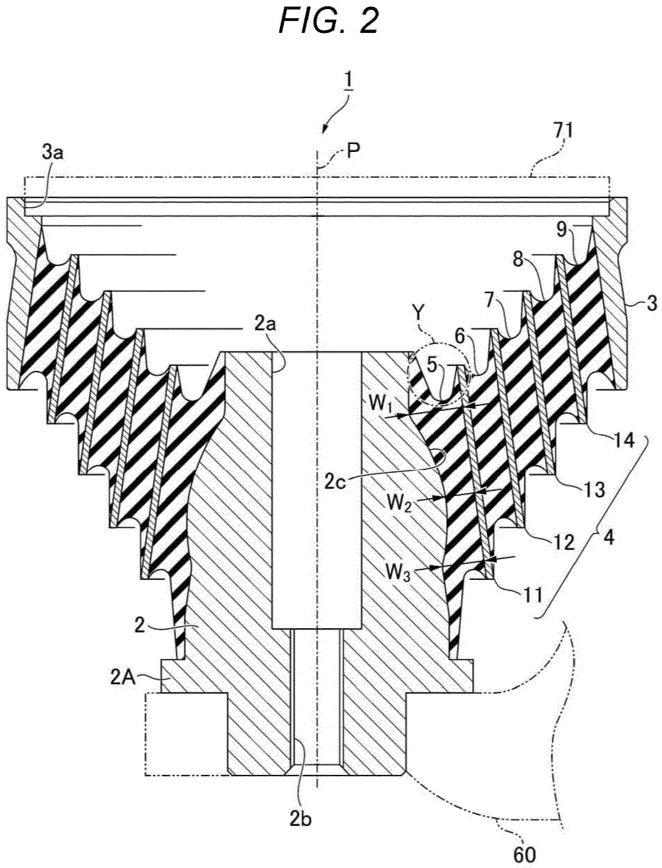

Next, the axle spring 1 according to the present embodiment are described hereinafter with reference to FIGS. 2 to 6. Note that since the pair of axle springs 1 at the front and rear has the same configuration, only of the axle spring 1 is described hereinafter.

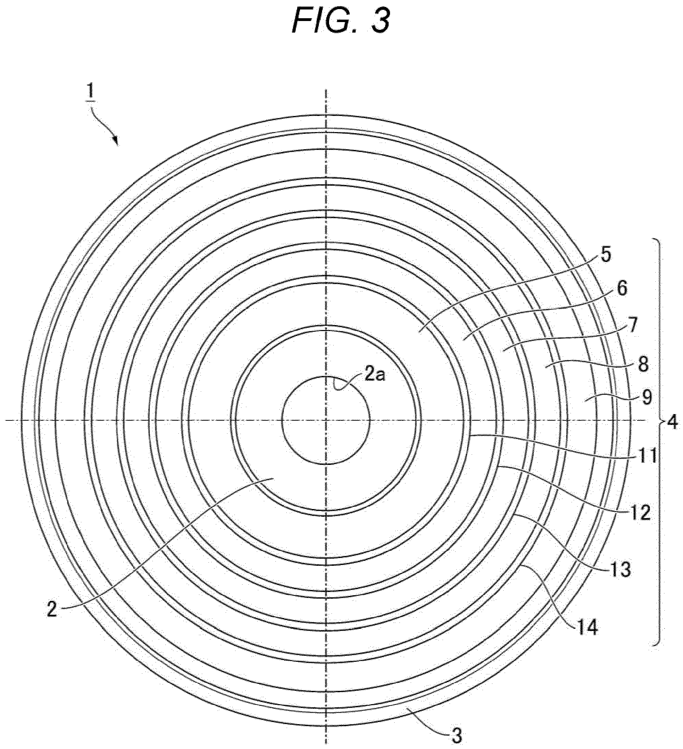

As illustrated in FIGS. 2 and 3, the axle spring 1 according to the present embodiment is inclined (conical), and includes a main shaft 2 disposed in a vertical direction, a tapered cylindrical outer cylinder 3 disposed concentrically with respect to a shaft center P of the main shaft 2 in an outward radial direction of the main shaft 2, and an elastic portion 4 interposed between the main shaft 2 and the outer cylinder 3.

The main shaft 2 is formed of metal in a substantially cylindrical shape, and each of a hollow portion 2a and a screw hole 2b are formed in an upper portion and a lower portion of an axial center portion of the main shaft 2. Further, a flange portion 2A is formed on an outer periphery of a lower end portion of the main shaft 2. Also, the lower end portion of the main shaft 2 is attached to the axle box 60 illustrated in FIG. 1 by a bolt (not illustrated) screwed into the screw hole 2b.

The outer cylinder 3 is formed into a tapered cylinder using the same metal as the main shaft 2. Specifically, the outer cylinder 3 is formed into a tapered cylinder whose diameter decreases upward, and is inclined inward (inward radial direction) at a predetermined angle with respect to the shaft center P of the main shaft 2. An engagement step portion 3a is formed on an inner periphery of an upper end portion of the outer cylinder 3, and a discoidal mounting plate 71 for mounting the outer cylinder 3 to the truck frame 70A (see FIG. 1) is fitted to the engagement step portion 3a.

An elastic portion 4 has a laminated structure (five-layered structure) in which a plurality (five in the illustrated example) of tapered cylindrical elastic bodies 5, 6, 7, 8, and 9 and a plurality (four in the illustrated example) of tapered cylindrical intermediate hard cylinders 11, 12, 13, and 14 are concentrically arranged and alternately laminated in a radial direction. Here, each of the elastic bodies 5 to 9 is made of rubber. Each of the intermediate hard cylinders 11 to 14 is made of the same metal as the main shaft 2 and the outer cylinder 3. The elastic bodies 5 to 9 and the intermediate hard cylinders 11 to 14 are formed into tapered cylinders whose diameter decreases upward. Specifically, each of the elastic bodies 5 to 9 and the intermediate hard cylinders 11 to 14 are inclined inward (inward radial direction) at a predetermined angle (same angle as the inclination angle of the outer cylinder 3) with respect to the shaft center P of the main shaft 2. Additionally, natural rubber, chloroprene rubber, nitrile rubber, butyl rubber, or the like is used as the rubber constituting each of the elastic bodies 5 to 9.

In the elastic portion 4 configured as described above, inner and outer peripheral surfaces of the plurality of elastic bodies 5 to 9 made of rubber are fixed to an outer peripheral surface of the main shaft 2, an inner peripheral surface of the outer cylinder 3, or inner and outer peripheral surfaces of the adjacent intermediate hard cylinders 11 to 14 by vulcanization adhesion. Specifically, with respect to an elastic body 5, an inner peripheral surface of an innermost layer thereof is fixed to the outer peripheral surface of the main shaft 2, and an outer peripheral surface thereof is fixed to the inner peripheral surface of an intermediate hard cylinder 11. Further, the other elastic bodies 6 to 8 constituting an intermediate layer are fixed to each of the inner and outer peripheral surfaces between each of the adjacent two intermediate hard cylinders 11 and 12, 12 and 13, and 13 and 14. The elastic body 9 in the outermost layer is fixed to the outer peripheral surface of an intermediate hard cylinder 14 and the inner peripheral surface of the outer cylinder 3. Note that the upper and lower end surfaces of each of the elastic bodies 5 to 9 are formed as concave curved surfaces in order to avoid stress concentration.

As illustrated in FIG. 1, the axle spring 1 configured as the above elastically supports the truck 70 with respect to the wheel 50 and the axle 51, a load from the truck 70 is input from the outer cylinder 3, and the load is received by the plurality of elastic bodies 5 to 9 of the elastic portion 4 constituting the laminated structure. Here, in the axle spring 1, since the outer cylinder 3, and the plurality of elastic bodies 5 to 9 and the intermediate hard cylinders 11 to 14 constituting the elastic portion 4, are inclined at a predetermined angle with respect to the shaft center P of the main shaft 2 as described above, each of the elastic bodies 5 to 9 receives a dynamic load in each of a vertical direction, a horizontal direction, and a front-rear direction in a state in which a static load is applied in a vertical direction hereto. In this case, a shearing force and a compressive force act on each of the elastic bodies 5 to 9, while a large shearing force acts on the upper surface sides of each of the elastic bodies 5 to 9. Thus, when each of the elastic bodies 5 to 9 receives a load in the front-rear and horizontal directions in this state, tensile and compressive loads are applied to these elastic bodies 5 to 9.

As described above, when tensile and compressive loads are applied to each of the elastic bodies 5 to 9, significant stress and strain is generated at upper portions of the elastic bodies 5 to 9, particularly at the upper portion (Y portion in FIG. 2) of the innermost elastic body 5. This leads to a problem in which cracking or peeling occurs at this portion, reducing the durability of the axle spring 1.

Therefore, as illustrated in FIG. 2, in the present embodiment, a part of a portion of the outer peripheral surface of the main shaft 2 at which the innermost elastic body 5 is fixed is a part of a spherical surface 2c (illustrated as a part of an arc in the longitudinal sectional view of FIG. 2), and a thickness W of the innermost elastic body 5 gradually decreases from the upper portion to an intermediate portion (intermediate height position) and gradually increases from the intermediate portion to a lower portion. Also, when the thickness W of the upper portion of the elastic body 5 is W₁, the thickness W of the intermediate portion is W₂, and the thickness W of the lower portion is W₃, a magnitude relationship illustrated in expression (1) below is established. ${W}_{1} > {W}_{3} > {W}_{2}$ (1)

The thickness W of the elastic body 5 represents the thickness of the elastic body 5 in a direction perpendicular to a tapered cylindrical surface of the intermediate hard cylinder 11. The thickness W₁ of the upper portion is the thickness of the portion having the largest thickness W at the upper portion of the elastic body 5. The thickness W₂ of the intermediate portion is the thickness of the portion having the smallest thickness W at the intermediate portion between the upper portion and the lower portion of the elastic body 5. The thickness W₃ of the lower portion is the thickness of the portion having the largest thickness W at the lower portion of the elastic body 5.

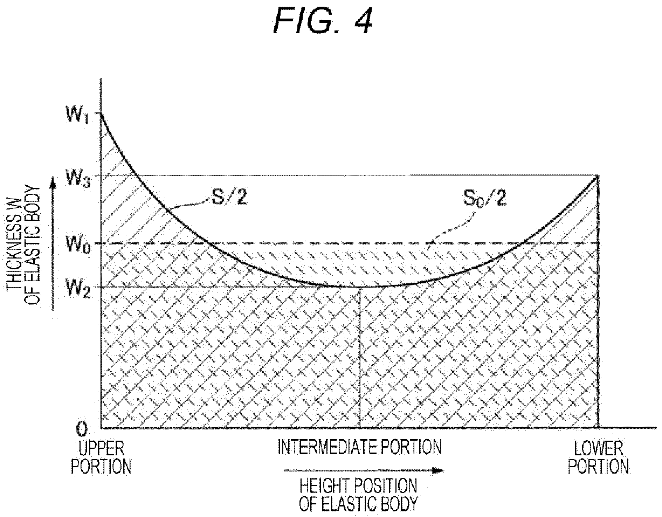

The results of evaluating the characteristics of the axle spring of the Example, which is the axle spring 1 according to the present embodiment, and the axle spring of the Comparative Example, are described hereinafter. The axle spring of the Comparative Example is the conventional axle spring 101 illustrated in FIG. 9, in which an innermost elastic body has a thickness illustrated in FIG. 4, which is described later.

FIG. 4 illustrates a change in the thickness W along the vertical direction of the innermost elastic body of the axle spring 1 of the Example compared with the axle spring 101 of the Comparative Example. The thickness W of the elastic body 5 of the axle spring 1 of the Example is illustrated as the maximum value W₁ at the upper portion, and gradually decreases from the upper portion toward the intermediate portion to be illustrated as the minimum value W₂ at the intermediate portion. The thickness W also gradually increases from the minimum value W₂ at the intermediate portion to W₃ toward the lower portion. W₁, W₂, and W₃ satisfy the magnitude relationship of the above expression (1). A thickness W₀ of the innermost elastic body 105 of the axle spring 101 of the Comparative Example is constant, as illustrated by the broken line in FIG. 4. The thickness W₀ is set to be smaller than the thickness W₁ of the upper end portion and the thickness W₃ of the lower end portion of the innermost elastic body 5 of the axle spring 1 of the Example and larger than the thickness W₂ of the intermediate portion, and a magnitude relationship illustrated in expression (2) below is established among these thicknesses W₀, W₁, W₂, and W₃. ${W}_{1} > {W}_{3} > {W}_{0} > {W}_{2}$ (2)

Further, an area of the elastic body 5 in the longitudinal sectional view of the axle spring 1 of the Example and an area of the elastic body 105 in the longitudinal sectional view of the axle spring 101 of the Comparative Example have been set as equal. Specifically, in FIG. 4, a value ΣW obtained by integrating the thickness W of the innermost elastic body 5 of the axle spring 1 of the Example in the vertical direction (horizontal direction in FIG. 4) is 1/2 of a longitudinal cross-sectional area S (= S/2) of the elastic body 5, and is represented by an area of the portion hatched with solid lines in FIG. 4. In the axle spring 101 of the Comparative Example, since the thickness W₀ of the innermost elastic body 105 is constant, 1/2 of a longitudinal cross-sectional area S₀ (= S₀/2) of the elastic body 105 is represented by an area of a portion hatched with broken lines (rectangular portion) in FIG. 4. The longitudinal cross-sectional area S of the elastic body 5 and the longitudinal cross-sectional area S₀ of the elastic body 105 have been set as equal (S = S₀). Here, both the elastic body 5 and the elastic body 105 are equal in length in the vertical direction. Additionally, both the elastic body 5 and the elastic body 105 are formed of the same rubber material.

The results of obtaining each of the strain rates of the elastic body 5 and the innermost elastic body 105 when a load that generates the same displacement of 2 mm is applied respectively to the axle spring 1 of the Example and the axle spring 101 of the Comparative Example are illustrated in Table 1.

**[Table 1]**

| | | Example | Comparative Example |
|---|---|---|---|
| Shape | | Spherical surface | Straight line |
| Elastic body thickness (mm) | Upper portion | 24.2 | 17.9 |
| | Intermediate portion | 13.6 | 17.9 |
| Displacement (mm) | | 2 | 2 |
| Strain rate | Upper portion | 8% | 11% |
| | Intermediate portion | 15% | 11% |

As illustrated in Table 1, while the thickness W₀ of the innermost elastic body 105 of the axle spring 101 of the Comparative Example at both the upper portion and the intermediate portion is 17.9 mm, the thicknesses W₁ and W₂ of the upper portion and the intermediate portion of the innermost elastic body 5 of the axle spring 1 of the Example are 24.2 mm and 13.6 mm, respectively. As a result of obtaining the strain rates of the upper portion and the intermediate portion of the innermost elastic body 105 and the innermost elastic body 5 in each of the innermost layers of the two axle springs 101 and 1, the strain rates of the upper portion and the intermediate portion of the innermost elastic body 105 in the axle spring 101 of the Comparative Example were both 11%.

In contrast, the strain rates of the upper portion and the intermediate portion of the innermost elastic body 5 in the axle spring 1 of the Example were 8% and 15%, respectively, and it was confirmed that the strain rate (tensile stress and strain) of the upper portion in which cracking or peeling of the elastic body 5 tends to occur can be minimized, leading to increased durability of the axle spring 1.

Here, a ratio of the thickness W₂ at the intermediate portion of the innermost elastic body 5 of the axle spring 1 of the Example to the thickness W₀ of the innermost elastic body 105 of the axle spring 101 of the Comparative Example is ${W}_{2} / {W}_{0} = 13.6 / 17.9 = 0.76 .$

In the axle spring 1 according to the present embodiment, a ratio of the thickness W₂ of the intermediate portion of the innermost elastic body 5 to the thickness of an innermost elastic body of other axle spring, in which the innermost elastic body has the same length in the vertical direction and the same longitudinal cross-sectional area, and a thickness of the innermost elastic body is constant, that is, the ratio W₂/W₀, is preferably set as 70% or more, and more preferably in the range of 70% to 80%.

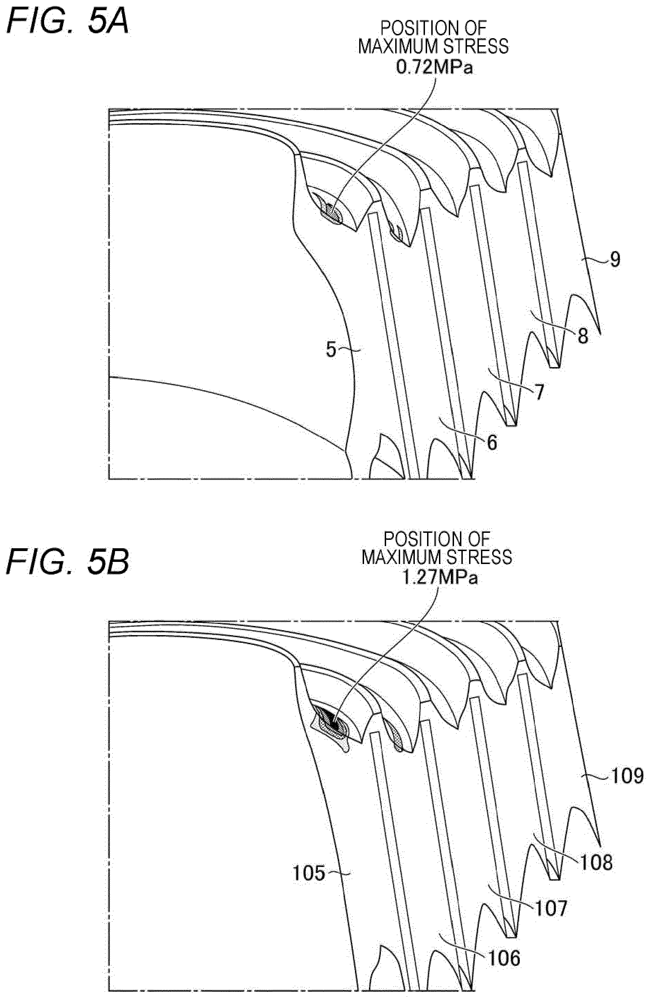

Next, FIGS. 5A and 5B respectively illustrate the results of stress analysis by FEM when a load is simultaneously applied to the axle spring 1 of the Example and the axle spring 101 of the Comparative Example in two directions, the vertical direction and the horizontal direction.

FIGS. 5A and 5B illustrate that the darker the color of hatching, the greater the stress. As illustrated in FIG. 5B, in the axle spring 101 of the Comparative Example, stress is most concentrated (the portion hatched in black) at the upper end portion in the vicinity of the region fixed to the main shaft of the innermost elastic body, and high stress of 1.27 MPa is generated. In contrast, similarly to the axle spring 101 of the Comparative Example, in the axle spring 1 of the Example illustrated in FIG. 5A, while a stress concentration region is observed at the upper end portion in the vicinity of the region fixed to the main shaft of the innermost elastic body, the maximum stress is minimized to 0.72 MPa. As is apparent from the analysis results, according to the axle spring 1 of the present embodiment, it is possible to increase durability by minimizing stress and strain at the upper portion of the innermost elastic body 5, in which cracking and peeling tend to occur.

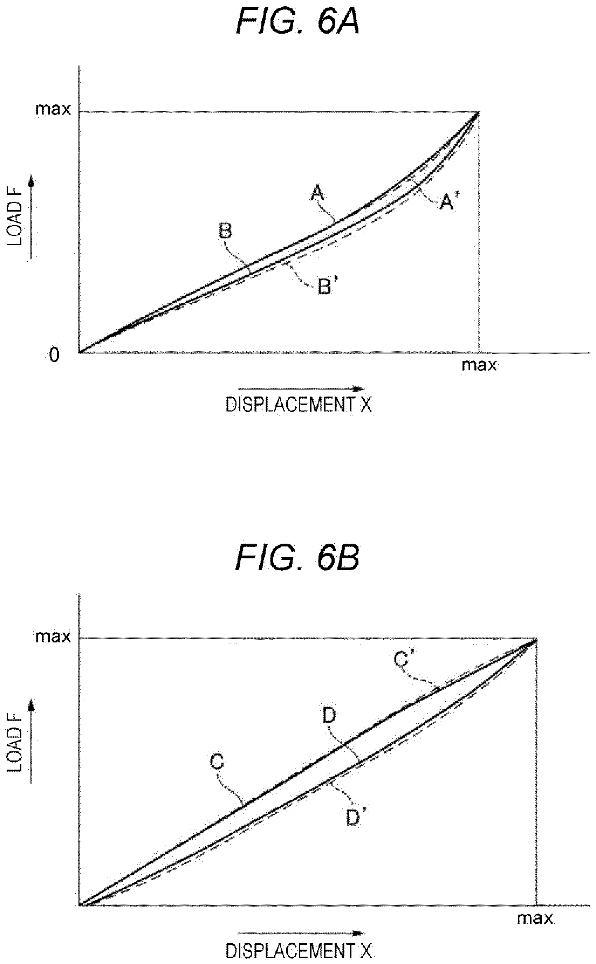

Next, FIG. 6A illustrates the spring characteristics in the vertical direction and FIG. 6B illustrates the spring characteristics in the horizontal direction measured for the axle spring 1 of the Example and the axle spring 101 of the Comparative Example.

In FIGS. 6A and 6B, the horizontal axis represents a displacement amount x, and the vertical axis represents a load F. In FIG. 6A, solid line curves A and B respectively illustrate the characteristics of the axle spring 1 of the Example during load application and during load removal, and broken line curves A' and B' respectively illustrate the characteristics of the axle spring 101 of the Comparative Example during load application and during load removal. As illustrated in FIG. 6A, it is understood that the relationships between the load F and the displacement amount x in the vertical direction of the axle spring 1 of the Example and the axle spring 101 of the Comparative Example are substantially the same, and the spring characteristics in the vertical direction are substantially consistent.

In FIG. 6B, solid line curves C and D respectively illustrate the characteristics of the axle spring 1 of the Example during load application and during load removal, and broken line curves C' and D' respectively illustrate the characteristics of the axle spring 101 of the Comparative Example during load application and during load removal. As illustrated in FIG. 6B, it is understood that the relationships between the load F and the displacement amount x in the horizontal direction of the axle spring 1 of the Example and the axle spring 101 of the Comparative Example are substantially the same, and the spring characteristics in the horizontal direction are substantially consistent.

It is considered that the displacement amount with respect to the load of the axle spring, that is, the spring characteristics, are determined by the average thickness along the vertical direction of each layer of the elastic body and the length (height) in the vertical direction. In the axle spring 1 of the Example and the axle spring 101 of the Comparative Example, since the lengths in the vertical direction of the elastic body 5 and the elastic body 105 are equal, and the longitudinal cross-sectional area S of the elastic body 5 and the longitudinal cross-sectional area S₀ of the elastic body 105 are equal, it is considered that the same spring characteristics have been obtained.

Therefore, the axle spring 1 according to the present embodiment, in which the thickness W of the innermost elastic body 5, the thickness W₁ of the upper portion, the thickness W₂ of the intermediate portion, and the thickness W₃ of the lower portion satisfy the magnitude relationship illustrated in expression (1), has the same spring characteristics as the other axle spring with a same length in the vertical direction and a same longitudinal cross-sectional area of the innermost elastic body, and a constant thickness of the innermost elastic body, and further, with respect to the other axle spring with the same length in the vertical direction and the same longitudinal cross-sectional area of the innermost elastic body, and a constant thickness of the innermost elastic body, it is possible to minimize stress and strain generated at the upper portion of the innermost elastic body 5.

As above, the axle spring 1 according to the present embodiment has the same spring characteristics as the other axle spring with a same length in a vertical direction and a same longitudinal cross-sectional area of an innermost elastic body, and a constant thickness of an innermost elastic body, and further, has higher durability than the other axle spring.

In other words, by setting the longitudinal cross-sectional area S of the innermost elastic body 5 to be the same as the longitudinal cross-sectional area S₀ of the innermost elastic body 105 of the conventional axle spring 101 whose thickness is constant along the vertical direction (S = S₀), it is possible to satisfy the spring characteristics (spring constants in the vertical direction and the horizontal direction, or the like) required for the axle spring 1. Therefore, an effect in which it is possible to increase durability of the axle spring 1 while maintaining the spring characteristics required for the axle spring 1 is obtained.

Note that the longitudinal cross-sectional area S of the innermost elastic body 5 of the axle spring 1 according to the present embodiment and the longitudinal cross-sectional area S₀ of the innermost elastic body 105 of the axle spring 101 of the Comparative Example being the same (S = S₀) does not mean that these are exactly the same, and includes a case in which a slight difference (about ± 5%) is present between both of the longitudinal cross-sectional areas S and S₀.

Further, in the axle spring 1 according to the present embodiment, the center of a sphere constituting a part of the spherical surface 2c formed on the outer peripheral surface of the main shaft 2 does not have to be on the shaft center P of the main shaft 2. Additionally, the portion at which the innermost elastic body 5 is fixed to at least the outer peripheral surface of the main shaft 2 may be a convex curved surface, and may be, for example, an elliptical curved surface.

Further, while the axle spring 1 according to the present embodiment includes the elastic portion 4 having a five-layered structure in which the five elastic bodies 5 to 9 and the four intermediate hard cylinders 11 to 14 are alternately laminated in the radial direction, the layered structure of the elastic portion 4 is arbitrary and may constitute less than five layers or six layers or more.

### <Second Embodiment>

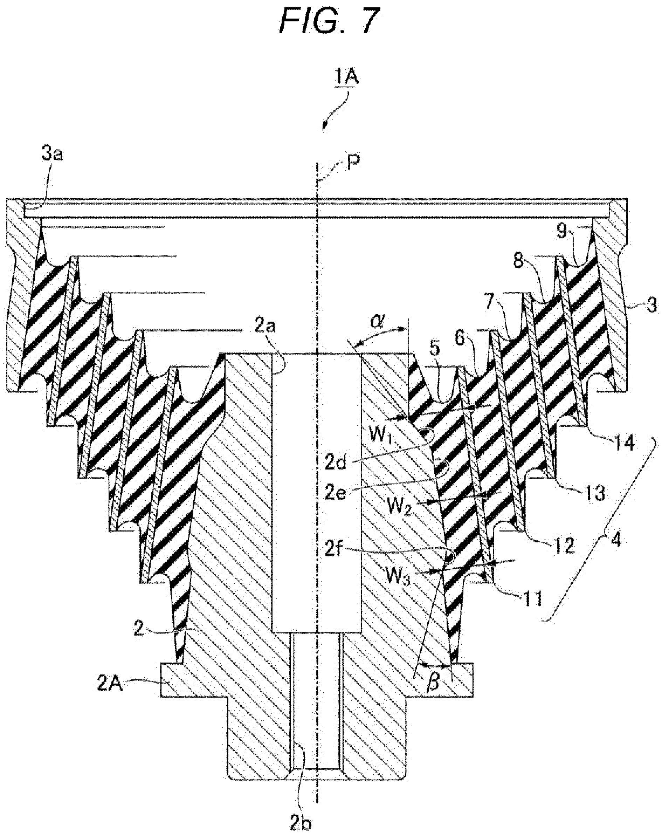

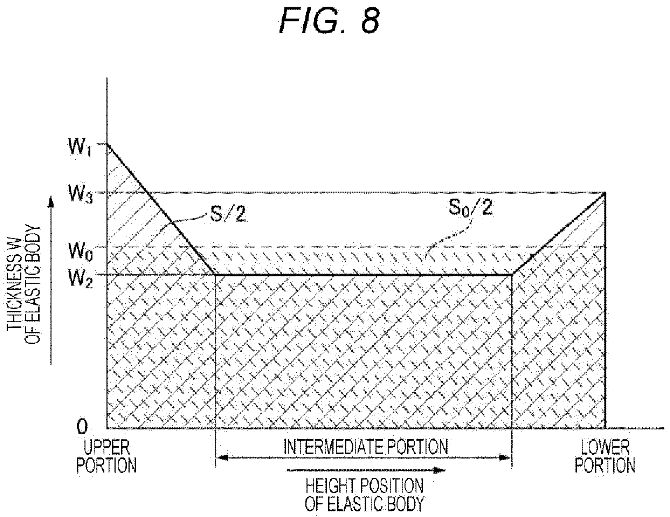

Next, a second embodiment of the present invention is described hereinafter with reference to FIGS. 7 and 8.

FIG. 7 is a longitudinal sectional view of an axle spring according to the second embodiment of the present invention. Note that in FIG. 7, the same features as those illustrated in FIG. 2 are denoted by the same reference numerals and descriptions thereof are omitted below.

In an axle spring 1A according to the present embodiment, as illustrated in FIG. 7, a part of the portion at which the innermost elastic body 5 is fixed on the outer peripheral surface of the main shaft 2 is set as a plurality (three in the illustrated example) of tapered surfaces 2d, 2e, and 2f having different inclination angles, and the thickness W of the innermost elastic body 5 gradually decreases from the upper portion to the intermediate portion and gradually increases from the intermediate portion to the lower portion. The thickness W of the elastic body 5 is illustrated as the maximum value W₁ at the upper portion, and gradually decreases from the upper portion toward the intermediate portion to be illustrated as the minimum value W₂ at the intermediate portion. The thickness W of the elastic body 5 also gradually increases from the minimum value W₂ at the intermediate portion to W₃ toward the lower portion. The thickness W₁ of the upper portion and the thickness W₃ of the lower portion are larger than the thickness W₂ of the intermediate portion, and the thickness W₁ of the upper portion is larger than the thickness W₃ of the lower portion. Similarly to the axle spring 1 according to the first embodiment, the magnitude relationship of expression (1) is satisfied.

Among the three tapered surfaces 2d, 2e, and 2f, a tapered surface 2d of an upper portion and a tapered surface 2f of a lower portion have opposite inclination angles, the tapered surface 2d is inclined inward so as to have a decreasing diameter upward, and the tapered surface 2f is inclined outward so as to have an increasing diameter upward. For example, an inclination angle α of the tapered surface 2d of an upper portion with respect to the shaft center P of the main shaft 2 is set as larger than an inclination angle β of the tapered surface 2f of a lower portion with respect to the shaft center P of the main shaft 2 (α > β). In addition, a tapered surface 2e of an intermediate portion is inclined inward (inward radial direction) at the same angle as the intermediate hard cylinder 11 so as to have a decreasing diameter upward, and an interval between the tapered surface 2e and the intermediate hard cylinder 11 (thickness W₂ of the intermediate portion of the elastic body 5) is kept constant.

Here, FIG. 8 illustrates a change in the thickness W along the vertical direction of the innermost elastic body 5 compared with the Comparative Example. The thickness W of the elastic body 5 of the axle spring 1A according to the embodiment is illustrated as the maximum value W₁ at the upper portion, gradually decreases from the upper portion toward the intermediate portion to be illustrated as the minimum value W₂ at the intermediate portion, and gradually increases from the minimum value W₂ at the intermediate portion to W₃.toward the lower portion. In this case, the thickness W₁ of the upper portion and the thickness W₃ of the lower portion are larger than the thickness W₂ of the intermediate portion, and the thickness W₁ of the upper portion is larger than the thickness W₃ of the lower portion.

In addition, the thickness W₀ of the innermost elastic body 105 of the axle spring 101 of the Comparative Example is constant as illustrated in FIG. 8, and the thickness W₀ is set as smaller than the thickness W₁ of the upper portion and the thickness W₃ of the lower portion and larger than the thickness W₂ of the intermediate portion of the innermost elastic body 5 of the axle spring 1A according to the present embodiment.

Also, in the present embodiment, the longitudinal cross-sectional area of the innermost elastic body 5 can be set as equal to the longitudinal cross-sectional area of the innermost elastic body 105 of the axle spring 101 of the Comparative Example.

In FIG. 8, the value ΣW obtained by integrating the thickness W of the innermost elastic body 5 in the vertical direction (horizontal direction in FIG. 8) is 1/2 of the longitudinal cross-sectional area S (= S/2) of the elastic body 5, and is represented by an area of the portion hatched with solid lines in FIG. 8. In contrast, in the axle spring 101 of the Comparative Example, since the thickness W₀ of the innermost elastic body 105 is constant, 1/2 of the longitudinal cross-sectional area S₀ (= So/2) of the elastic body 105 is represented by an area of the portion hatched with broken lines (rectangular portion) in FIG. 8.

Also, in the present embodiment, similarly to the first embodiment, the longitudinal cross-sectional area S of the innermost elastic body 5 of the axle spring 1 is set as equal to the longitudinal cross-sectional area S₀ of the innermost elastic body 105 of the axle spring 101 of the Comparative Example (S = S₀). In this case, both the elastic body 5 and the elastic body 105 are equal in length in the vertical direction. Additionally, both the elastic body 5 and the elastic body 105 are formed of the same rubber material.

Therefore, as in the axle spring 1A according to the present embodiment, even when the thickness W of the innermost elastic body 5 is changed in the height direction as illustrated in FIG. 8, by setting the longitudinal cross-sectional area S of the elastic body 5 as the same as the longitudinal cross-sectional area S₀ of the innermost elastic body 105 of the conventional axle spring 101, whose thickness is constant along the vertical direction (S = So), it is possible to increase durability of the axle spring 1A by minimizing stress and strain generated at the upper portion of the innermost elastic body 5 of the axle spring 1A while satisfying the spring characteristics (the spring constants in the vertical direction and the horizontal direction, or the like) required for the axle spring 1A according to the present embodiment.

Additionally, in the axle spring 1A according to the present embodiment, while the three tapered surfaces 2d, 2e, and 2f having different inclination angles are formed on the outer peripheral surface of the main shaft 2 to which at least the innermost elastic body 5 is fixed, the number of tapered surfaces is arbitrary.

In addition, the present invention is not limited to the embodiments described above, and various modifications can be made within the scope of the technical ideas described in the claims, the specification, and the drawings. The scope of protection is defined by the appended claims.

## Claims

1. An axle spring (1; 1A) comprising:
a main shaft (2) arranged in a vertical direction;
an outer cylinder (3) with a tapered cylindrical shape arranged concentrically with respect to a shaft center (P) of the main shaft (2) in an outward radial direction of the main shaft (2); and
an elastic portion (4) interposed between the main shaft (2) and the outer cylinder (3), the elastic portion (4) having a laminated structure in which a plurality of elastic bodies (5 to 9) and a plurality of intermediate hard cylinders (11 to 14) with a tapered cylindrical shape arranged concentrically are alternately laminated in a radial direction, the elastic bodies (5 to 9) and the intermediate hard cylinders (11 to 14) are formed into tapered cylinders whose diameter decreases upward, wherein
the plurality of elastic bodies (5 to 9) include an innermost elastic body (5)fixed to an outer peripheral surface of the main shaft (2), wherein a thickness W₁ of an upper portion of the innermost elastic body (5), a thickness W₂ of an intermediate portion of the innermost elastic body (5), and a thickness W₃ of a lower portion of the innermost elastic body (5) satisfy a magnitude relationship of ${W}_{1} > {W}_{3} > {W}_{2} ,$
**characterized in that**
the innermost elastic body (5) has a tapered cylindrical shape, and
a portion of the outer peripheral surface of the main shaft (2) to which the innermost elastic body (5) is fixed is a part of a spherical surface (2c), and a thickness of the innermost elastic body (5) gradually decreases from the upper portion to the intermediate portion and gradually increases from the intermediate portion to the lower portion.

2. An axle spring (1; 1A) comprising:
a main shaft (2) arranged in a vertical direction;
an outer cylinder (3) with a tapered cylindrical shape arranged concentrically with respect to a shaft center (P) of the main shaft (2) in an outward radial direction of the main shaft (2); and
an elastic portion (4) interposed between the main shaft (2) and the outer cylinder (3), the elastic portion (4) having a laminated structure in which a plurality of elastic bodies (5 to 9) and a plurality of intermediate hard cylinders (11 to 14) with a tapered cylindrical shape arranged concentrically are alternately laminated in a radial direction, the elastic bodies (5 to 9) and the intermediate hard cylinders (11 to 14) are formed into tapered cylinders whose diameter decreases upward, wherein
the plurality of elastic bodies (5 to 9) include an innermost elastic body (5) fixed to an outer peripheral surface of the main shaft (2), wherein a thickness W₁ of an upper portion of the innermost elastic body (5), a thickness W₂ of an intermediate portion of the innermost elastic body (5), and a thickness W₃ of a lower portion of the innermost elastic body (5) satisfy a magnitude relationship of ${W}_{1} > {W}_{3} > {W}_{2} ,$
**characterized in that**
the innermost elastic body (5) has a tapered cylindrical shape, and
a portion of the outer peripheral surface of the main shaft (2) to which the innermost elastic body (5) is fixed is a plurality of tapered surfaces (2d, 2e, 2f) having different inclination angles, and the tapered surface (2d) of the upper portion and the tapered surface (2f) of the lower portion have opposite inclination angles, the tapered surface (2d) of the upper portion is inclined inward so as to have a decreasing diameter upward, and the tapered surface (2f) of the lower portion is inclined outward so as to have an increasing diameter upward.

## Patentansprüche

1. Achsfeder (1; 1A), umfassend:
eine in vertikaler Richtung angeordnete Hauptwelle (2);
einen äußeren Zylinder (3) mit einer konisch zylindrischen Form, die in Bezug auf eine Wellenmitte (P) der Hauptwelle (2) in einer nach außen gerichteten radialen Richtung der Hauptwelle (2) konzentrisch angeordnet ist; und
einen elastischen Abschnitt (4), der zwischen die Hauptwelle (2) und den äußeren Zylinder (3) eingefügt ist, wobei der elastische Abschnitt (4) eine laminierte Struktur aufweist, in der eine Vielzahl von elastischen Körpern (5 bis 9) und eine Vielzahl von harten Zwischenzylindern (11 bis 14) mit einer konisch zylindrischen Form konzentrisch angeordnet und abwechselnd in radialer Richtung laminiert sind, wobei die elastischen Körper (5 bis 9) und die harten Zwischenzylinder (11 bis 14) zu konischen Zylindern geformt sind, deren Durchmesser nach oben hin abnimmt,
wobei die Vielzahl der elastischen Körper (5 bis 9) einen innersten elastischen Körper (5) beinhaltet, der an einer äußeren Umfangsfläche der Hauptwelle (2) befestigt ist, wobei eine Stärke W₁ eines oberen Abschnitts des innersten elastischen Körpers (5), eine Stärke W₂ eines Zwischenabschnitts des innersten elastischen Körpers (5) und eine Stärke W₃ eines unteren Abschnitts des innersten elastischen Körpers (5) eine Größenbeziehung von W₁ > W₃ > W₂ erfüllen,
**dadurch gekennzeichnet, dass**
der innerste elastische Körper (5) eine konisch zylindrische Form aufweist und
ein Abschnitt der äußeren Umfangsfläche der Hauptwelle (2), an dem der innerste elastische Körper (5) befestigt ist, Teil einer kugelförmigen Oberfläche (2c) ist, und eine Stärke des innersten elastischen Körpers (5) sich von dem oberen Abschnitt zu dem Zwischenabschnitt allmählich verringert und von dem Zwischenabschnitt zu dem unteren Abschnitt allmählich zunimmt.

2. Achsfeder (1; 1A), umfassend:
eine in vertikaler Richtung angeordnete Hauptwelle (2);
einen äußeren Zylinder (3) mit einer konisch zylindrischen Form, die in Bezug auf eine Wellenmitte (P) der Hauptwelle (2) in einer nach außen gerichteten radialen Richtung der Hauptwelle (2) konzentrisch angeordnet ist; und
einen elastischen Abschnitt (4), der zwischen die Hauptwelle (2) und den äußeren Zylinder (3) eingefügt ist, wobei der elastische Abschnitt (4) eine laminierte Struktur aufweist, in der eine Vielzahl von elastischen Körpern (5 bis 9) und eine Vielzahl von harten Zwischenzylindern (11 bis 14) mit einer konisch zylindrischen Form konzentrisch angeordnet und abwechselnd in radialer Richtung laminiert sind, wobei die elastischen Körper (5 bis 9) und die harten Zwischenzylinder (11 bis 14) zu konischen Zylindern geformt sind, deren Durchmesser nach oben hin abnimmt,
wobei die Vielzahl der elastischen Körper (5 bis 9) einen innersten elastischen Körper (5) beinhaltet, der an einer äußeren Umfangsfläche der Hauptwelle (2) befestigt ist, wobei eine Stärke W₁ eines oberen Abschnitts des innersten elastischen Körpers (5), eine Stärke W₂ eines Zwischenabschnitts des innersten elastischen Körpers (5) und eine Stärke W₃ eines unteren Abschnitts des innersten elastischen Körpers (5) eine Größenbeziehung von W₁ > W₃ > W₂ erfüllen,
**dadurch gekennzeichnet, dass**
der innerste elastische Körper (5) eine konisch zylindrische Form aufweist, und
ein Abschnitt der äußeren Umfangsfläche der Hauptwelle (2), an dem der innerste elastische Körper (5) befestigt ist, eine Vielzahl von konischen Flächen (2d, 2e, 2f) ist, die unterschiedliche Neigungswinkeln aufweisen, und dass die konische Fläche (2d) des oberen Abschnitts und die konische Fläche (2f) des unteren Abschnitts entgegengesetzte Neigungswinkel aufweisen, wobei die konische Fläche (2d) des oberen Abschnitts nach innen geneigt ist, um einen nach oben hin abnehmenden Durchmesser aufzuweisen, und die konische Fläche (2f) des unteren Abschnitts nach außen geneigt ist, um einen nach oben hin zunehmenden Durchmesser aufzuweisen.

## Revendications

1. Ressort d'essieu (1 ; 1A) comprenant :
un arbre principal (2) disposé dans une direction verticale ;
un cylindre externe (3) de forme cylindrique conique disposé de manière concentrique par rapport à un centre d'arbre (P) de l'arbre principal (2) dans une direction radiale extérieure de l'arbre principal (2) ; et
une partie élastique (4) intercalée entre l'arbre principal (2) et le cylindre externe (3), la partie élastique (4) ayant une structure stratifiée dans laquelle une pluralité de corps élastiques (5 à 9) et une pluralité de cylindres rigides intermédiaires (11 à 14) de forme cylindrique conique disposés de manière concentrique sont stratifiés alternativement dans une direction radiale, les corps élastiques (5 à 9) et les cylindres rigides intermédiaires (11 à 14) sont formés en cylindres coniques dont le diamètre diminue vers le haut, dans lequel :
la pluralité de corps élastiques (5 à 9) comprend un corps élastique le plus interne (5) fixé à une surface périphérique externe de l'arbre principal (2), dans lequel une épaisseur W₁ d'une partie supérieure du corps élastique le plus interne (5), une épaisseur W₂ d'une partie intermédiaire du corps élastique le plus interne (5), et une épaisseur W₃ d'une partie inférieure du corps élastique le plus interne (5) satisfont une relation de grandeur de : ${W}_{1} > {W}_{3} > {W}_{2} ,$
**caractérisé en ce que** :
le corps élastique le plus interne (5) a une forme cylindrique conique, et
une partie de la surface périphérique externe de l'arbre principal (2) à laquelle le corps élastique le plus interne (5) est fixé, est une partie d'une surface sphérique (2c), et une épaisseur du corps élastique le plus interne (5) diminue progressivement de la partie supérieure vers la partie intermédiaire et augmente progressivement de la partie intermédiaire vers la partie inférieure.

2. Ressort d'essieu (1 ; 1A) comprenant :
un arbre principal (2) disposé dans une direction verticale ;
un cylindre externe (3) de forme cylindrique conique disposé de manière concentrique par rapport à un centre d'arbre (P) de l'arbre principal (2) dans une direction radiale extérieure de l'arbre principal (2) ; et
une partie élastique (4) intercalée entre l'arbre principal (2) et le cylindre externe (3), la partie élastique (4) ayant une structure stratifiée dans laquelle une pluralité de corps élastiques (5 à 9) et une pluralité de cylindres rigides intermédiaires (11 à 14) de forme cylindrique conique disposés de manière concentrique sont stratifiés alternativement dans une direction radiale, les corps élastiques (5 à 9) et les cylindres rigides intermédiaires (11 à 14) sont formés en cylindres coniques dont le diamètre diminue vers le haut, dans lequel :
la pluralité de corps élastiques (5 à 9) comprend un corps élastique le plus interne (5) fixé à une surface périphérique externe de l'arbre principal (2), dans lequel une épaisseur W₁ d'une partie supérieure du corps élastique le plus interne (5), une épaisseur W₂ d'une partie intermédiaire du corps élastique le plus interne (5), et une épaisseur W₃ d'une partie inférieure du corps élastique le plus interne (5) satisfont une relation de grandeur de : ${W}_{1} > {W}_{3} > {W}_{2} ,$
**caractérisé en ce que** :
le corps élastique le plus interne (5) a une forme cylindrique conique, et
une partie de la surface périphérique externe de l'arbre principal (2) à laquelle le corps élastique le plus interne (5) est fixé, est une pluralité de surfaces coniques (2d, 2e, 2f) ayant des angles d'inclinaison différents, et la surface conique (2d) de la partie supérieure et la surface conique (2f) de la partie inférieure ont des angles d'inclinaison opposés, la surface conique (2d) de la partie supérieure est inclinée vers l'intérieur de façon à avoir un diamètre décroissant vers le haut, et la surface conique (2f) de la partie inférieure est inclinée vers l'extérieur de façon à avoir un diamètre croissant vers le haut.
